(19) **Europäisches Patentamt** / **European Patent Office** / **Office européen des brevets**

(11) **EP 2 641 241 B1**

(12) **EUROPÄISCHE PATENTSCHRIFT**

(45) Veröffentlichungstag und Bekanntmachung des Hinweises auf die Patenterteilung:
**02.05.2018 Patentblatt 2018/18**

(21) Anmeldenummer: **11784430.8**

(22) Anmeldetag: **16.11.2011**

(51) Int Cl.:
**G09C 1/00** (2006.01)

(86) Internationale Anmeldenummer:
**PCT/EP2011/005774**

(87) Internationale Veröffentlichungsnummer:
**WO 2012/065730 (24.05.2012 Gazette 2012/21)**

(54) **VERFAHREN ZUR LANGZAHLDIVISION ODER MODULARE REDUKTION**

METHOD FOR LONG-NUMBER DIVISION OR MODULAR REDUCTION

PROCÉDÉ DE DIVISION LONGUE OU DE RÉDUCTION MODULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2010 DE 102010051853**

(43) Veröffentlichungstag der Anmeldung:
**25.09.2013 Patentblatt 2013/39**

(73) Patentinhaber: **Giesecke+Devrient Mobile Security GmbH**
**81677 München (DE)**

(72) Erfinder:
- **BOCKES, Markus**
  **81927 München (DE)**
- **PULKUS, Jürgen**
  **80469 München (DE)**

(56) Entgegenhaltungen:
**EP-A1- 2 003 547**

**Beschreibung**

Die vorliegende Erfindung betrifft ein Verfahren zum Ausführen einer kryptographischen Operation auf sicherheitsrelevanten Daten in einem portablen Datenträger sowie einen entsprechend eingerichteten Datenträger.

Im Rahmen einer kryptographischen Operation, z.B. einer Ver- oder Entschlüsselung von Daten, dem Erzeugen einer digitalen Signatur oder einem Verifizieren einer solchen, werden wiederholt grundlegende Operationen verwendet. Diese sind insbesondere eine Langzahlmultiplikation, Langzahldivision oder modulare Reduktion, beispielsweise im Rahmen der Berechnungen eines RSA-Verfahrens oder eines DSA- bzw. ECDSA-Signatur-Algorithmus.

Der Ressourcenaufwand zum wiederholten Durchführen einer modularen Multiplikation, wie sie beispielsweise bei der Berechnung eines Wertes der Form $x^d \bmod n$ notwendig ist, konnte entscheidend dadurch vermindert werden, dass mittels des Einsatzes der so genannten Montgomery-Multiplikation eine gemäß dem bis dahin bekannten Verfahren notwendige Langzahldivision ausbleiben kann. Die Montgomery-Multiplikation ist in dem Artikel "Modular Multiplication Without Trial Division" von Peter L. Montgomery, Mathematics of Computation, Vol. 44, No. 170, April 1985, pp. 519-521, anschaulich beschrieben. Um diesen Effekt noch weiter zu steigern, umfassen zahlreiche portable Datenträger, welche zum Ausführen kryptographischer Operationen eingerichtet sind, entsprechende Koprozessoren zum Durchführen einer solchen Montgomery-Multiplikation.

Aufgabe der vorliegenden Erfindung ist es, auch den Ressourcenaufwand zum Durchführen einer modularen Reduktion auf einem portablen Datenträger zu vermindern. Insbesondere stellt sich die vorliegende Erfindung die Aufgabe, den Rest r = a mod b einer Division a/b effizient zu bestimmen, insbesondere für die Fälle eines vergleichsweise großen Divisors b sowie eines Dividenden a, welcher nochmals wesentlich größer ist als der Divisor b.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Eine grundlegende Idee der Erfindung besteht darin, ein Divisionsverfahren derart anzupassen, dass einzelne Verfahrensschritte als Montgomery-Multiplikation, und damit effizienter, eventuell zusätzlich mittels spezifischer Hardware, durchgeführt werden können.

Ein erfindungsgemäßes Verfahren in einem portablen Datenträger zum Ausführen einer kryptographischen Operation auf sicherheitsrelevanten Daten umfasst einen Schritt des Bestimmens des Restes eines Dividenden modulo eines Divisors. Dabei wird der Rest mittels einer Divisionseinrichtung des Datenträgers iterativ bestimmt. In jeweils einer Iteration wird eine Montgomery-Multiplikation mit dem Divisor als Modulus und eine additive Verknüpfung eines Ausgabewerts der Montgomery-Multiplikation mit einem von dem Dividenden abgeleiteten, der jeweiligen Iteration zugeordneten Koeffizienten durchgeführt. Die Montgomery-Multiplikation wird dabei mittels einer Multiplikationseinrichtung des Datenträgers durchgeführt. Die Montgomery-Multiplikation einer nachfolgenden Iteration empfängt ein Ergebnis einer vorhergehenden Iteration als einen Eingabewert.

Dementsprechend umfasst ein erfindungsgemäßer portabler Datenträger zum Ausführen einer kryptographischen Operation auf sicherheitsrelevanten Daten einen Prozessor, einen Speicher, eine Multiplikationseinrichtung zum Durchführen einer Montgomery-Multiplikation sowie eine Divisionseinrichtung. Diese ist eingerichtet, im Rahmen der kryptographischen Operation einen Rest eines Dividenden modulo eines Divisors zu bestimmen. Die Divisionseinrichtung ist insbesondere eingerichtet, den Rest iterativ zu bestimmen. Zur Bestimmung des Restes ist die Divisionseinrichtung eingerichtet, in jeweils einer Iteration eine Montgomery-Multiplikation mit dem Divisor als Modulus mittels der Multiplikationseinrichtung durchzuführen und eine additive Verknüpfung eines Ausgabewerts der Montgomery-Multiplikation mit einem von dem Dividenden abgeleiteten, der jeweiligen Iteration zugeordneten Koeffizienten durchzuführen. Die Multiplikationseinrichtung ist eingerichtet, zum Durchführen einer Montgomery-Multiplikation einer nachfolgenden Iteration ein Ergebnis einer vorhergehenden Iteration als einen Eingabewert zu empfangen.

Damit wird es möglich, auch eine modulare Reduktion unter Umgehung einer laufzeitintensiven gewöhnlichen Langzahldivision effizient durchzuführen. D.h. bereits unabhängig von der verwendeten Hardware werden Vorteile dadurch erzielt, dass die Anzahl durchzuführender Rechenschritte vermindert werden kann. Dies gilt insbesondere auch für beliebig große Dividenden. Eine nachstehend genau beschriebene, geeignete Zerlegung des Dividenden - entsprechend den genannten Koeffizienten - sowie das iterative Vorgehen des erfindungsgemäßen Verfahrens lassen also insbesondere auch die Verwendung einer Multiplikationseinrichtung in dem Datenträger zu, welche bezüglich der Ein- und Ausgabewerte beschränkt ist. Lediglich der Divisor ist gemäß dem vorliegenden Verfahren an eine solche Beschränkung gebunden. Das Verfahren ist also insbesondere dann vorteilhaft anwendbar, wenn bereits der Divisor recht groß, der Dividend aber nochmals deutlich größer ist.

Vorzugsweise umfasst die Multiplikationseinrichtung des Datenträgers einen Koprozessor, welcher eingerichtet ist, eine Montgomery-Multiplikation durchzuführen. Damit kann das erfindungsgemäße Verfahren dadurch zusätzlich beschleunigt werden, dass die Schritte der Montgomery-Multiplikation mittels dafür optimierter Hardware durchgeführt werden können. Der dadurch erreichbare doppelte Effekt der Reduzierung durchzuführender Rechenoperationen kombiniert mit der besonders effizienten Durchführung eines Großteils dieser Operationen mittels dafür optimierter Hardware macht das vorliegende Verfahren besonders vorteilhaft.

Wie erwähnt, ist in dem erfindungsgemäßen Verfahren lediglich der Divisor in seiner Größe durch Vorgaben der Multiplikationseinrichtung beschränkt. Eine solche Beschränkung ist beispielsweise bei Verwendung eines Koprozessors zum Durchführen der Montgomery-Multiplikation eine von dem Koprozessor verarbeitbare Wortlänge. Der Dividend ist diesen Vorgaben nicht unterworfen, d.h. das Verfahren bzw. der Datenträger können beliebig große Dividenden verarbeiten. Dies macht das erfindungsgemäße Verfahren insbesondere gegenüber einer gewöhnlichen Montgomery-Reduktion überlegen, welche lediglich Dividenden und Divisoren verarbeiten kann, die beide kleiner als einer oberen Grenze sind, die durch die maximalen Koprozessorlänge vorgegeben wird.

Die Multiplikationseinrichtung des Datenträgers kann eingerichtet sein, eine Montgomery-Multiplikation mit unterschiedlichen Ein- und Ausgabewerten durchzuführen, d.h. insbesondere, dass die Größe von Ein- und Ausgabewerten bauartbedingt eingeschränkt sein können. Gängige Ein- und Ausgabewerte liegen im Bereich von -M bis M-1 oder im Bereich von 0 bis 2*M-1 oder im Bereich von 0 bis R-1. Dabei wird mit M der Modulus bezeichnet, bezüglich dessen die Montgomery-Multiplikation durchgeführt wird, und mit R die zum Modulus M teilerfremde Zahl, die M bezüglich der Montgomery-Multiplikation zugeordnet ist. Es gilt stets, dass M kleiner ist als R. Im Folgenden wird aus Gründen der einfacheren Darstellung stets davon ausgegangen, dass die Ein- und Ausgabewerte einer Montgomery-Multiplikation nicht negativ und kleiner als der Modulus M oder kleiner als die zu M teilerfremde Zahl R sind.

Hinsichtlich des erfindungsgemäßen Verfahrens sind solche bezüglich der Ein- und Ausgabewerte verschiedenen Varianten der Montgomery-Multiplikation zwar zu unterscheiden, ändern aber das erfindungsgemäße Verfahren nicht grundlegend, sondern allenfalls im Detail. Entsprechende unterschiedliche Ausführungsformen des erfindungsgemäßen Verfahrens werden nachfolgend detailliert dargestellt.

Die Anzahl der Iterationen, welche das erfindungsgemäße Verfahren zur Bestimmung des Restes benötigt, ist durch das Verhältnis der Größe des Dividenden zur Größe des Divisors beschränkt, d.h. im Wesentlichen durch einen Quotienten, welcher sich aus dem Logarithmus des Dividenden zu einer gegebenen Basis durch den Logarithmus des Divisors zu der Basis ergibt. Zur Reduktion eines Dividenden in Form einer 1024-Bit-Zahl modulo eines Dividenden in Form einer 512-Bit-Zahl sind demnach lediglich zwei oder drei Iterationen des Verfahrens, im Wesentlichen also lediglich zwei oder drei Montgomery-Multiplikationen mit 512-Bit-Zahlen, erforderlich.

Die verschiedenen Ausführungsformen des erfindungsgemäßen Verfahrens haben in der Regel folgende Schritte gemeinsam: In einem ersten Schritt wird der Dividend geeignet zerlegt. D.h. der Dividend wird in Form einer Summe dargestellt. Die Anzahl der Summanden der Summe entspricht dabei der Anzahl der zur Bestimmung des Restes benötigten Iterationen. Jeder Summand der Summe ist aus einem Produkt zusammengesetzt, welches den der jeweiligen Iteration zugeordneten Koeffizienten und eine der Iteration zugeordnete Zweier-Potenz umfasst. Wird der Dividend beispielsweise mit a bezeichnet, so hat die Zerlegung die folgende Form:

$$a = \sum_{i=0,\dots,n} a_i * (2^N)^i.$$

Anschließend wird der zu berechnende Rest, welcher beispielsweise mit r bezeichnet werden soll, initialisiert. Je nach Ausführungsform wird z.B. $r := 0$ oder $r := a_n$ gesetzt.

In jeder Iteration werden dann folgende Teilschritte durchgeführt, wobei in jedem der Teilschritte der Rest jeweils aktualisiert wird: In einem ersten Teilschritt wird eine Montgomery-Multiplikation mit dem Divisor als Modulus durchgeführt. Die Montgomery-Multiplikation empfängt dabei als Eingabewerte den Rest sowie einen Ausgleichsfaktor und gibt einen aktualisierten Rest aus. Wird eine Montgomery-Multiplikation zweier Werte x und y bezüglich eines Modulus M mit MMult(x, y, M) bezeichnet, so kann der beschriebene Teilschritt wie folgt abkürzend angegeben werden: $r := MMult(r, m, b)$, wobei m den Ausgleichsfaktor bezeichnet und b den Divisor, welcher die Rolle des Modulus einnimmt. Der Ausgleichsfaktor m kann dabei beispielsweise die Form $m := 2^N * R \bmod b$ annehmen. Mit R wird dabei der der Montgomery-Multiplikation zugeordnete R-Wert bezeichnet. Es gilt per Definition: $MMult(x, y, M) := x*y*R^{-1} \bmod M$. Dabei ist stets M ungerade, kleiner als R und relativ prim zu R, d.h. R und M haben den Wert 1 als größten gemeinsamen Teiler. Der Wert $R^{-1}$- und der Wert M'- definieren sich bei gegebenem M und R wegen der Teilbarkeitsbedingung über die Gleichung $R* R^{-1} - M*M' = 1$.

In einem zweiten Teilschritt wird der Rest mit dem der Iteration zugeordneten Koeffizienten additiv verknüpft. Das daraus resultierende Ergebnis wird schließlich modulo dem Divisor reduziert, um wieder einen aktualisierten Rest zu bestimmen. In der i-ten Iteration kann dieser Schritt beispielsweise wie folgt dargestellt werden: $r := r + a_i \bmod b$.

Die Reihenfolge der beiden Teilschritte ist variabel, d.h. es gibt Ausführungsformen des Verfahrens, in denen der zweite Teilschritt in jeder Iteration vor dem ersten Teilschritt durchgeführt wird.

In der Regel liefert der aktualisierte Rest r am Ende der letzten Iteration den gesuchten Wert "a mod b". In manchen Anwendungszusammenhängen ist es jedoch erwünscht, statt des Wertes "a mod b" den Wert "a*R mod b" auszugeben. Dies kann mit einer vorstehend angedeuteten Ausführungsform erreicht werden, welche, nach geeigneter Initialisierung des Restes r, beispielsweise mit $r := 0$, den zweiten Teilschritt vor dem ersten ausführt.

Eine abschließende Montgomery-Multiplikation, nach Abschluss der letzten Iteration, kann verwendet werden, um aus dem Ausgabewert "a*R mod b" einen Ausgabewert "a mod b" zu erhalten. Diese Montgomery-Multiplikation mit dem Divisor als Modulus erhält als Eingabe den aktuellen Rest sowie den Wert "1", d.h. $r := MMult(r, 1, b)$.

Wie erwähnt, ist bei der Summendarstellung des Dividenden jeder Summand der Summe aus einem Produkt zusammengesetzt, welches den der jeweiligen Iteration zugeordneten Koeffizienten und eine der Iteration zugeordnete Zweier-Potenz umfasst. Diese der Iteration jeweils zugeordnete Zweier-Potenz besteht aus einer iterationsunabhängigen Grund-Zweier-Potenz, welche ihrerseits abhängig von der zugeordneten Iteration nochmals potenziert wird. Eine Grund-Zweier-Potenz $(2^N)$ wird beispielsweise in einer Iteration i jeweils zur i-ten Potenz erhoben, $(2^N)^i$, wie bereits vorstehend angedeutet.

Die Größe der Grund-Zweier-Potenz wird abhängig von der jeweiligen Ausführungsform beschränkt, beispielsweise durch die Größe des Divisors oder durch die Größe des dem Modulus bezüglich der Montgomery-Multiplikation zugeordneten R-Wertes. D.h. es gilt beispielsweise $(2^N) < b$ oder $(2^N) \leq R$, insbesondere auch $(2^N) = R$, da R in der Regel selbst eine Zweier-Potenz ist.

Auch die Größe der Koeffizienten des Dividenden ist verfahrensgemäß in ihrer Größe beschränkt, in der Regel durch die Größe des Modulus oder durch die Größe des dem Modulus bezüglich der Montgomery-Multiplikation zugeordneten R-Wertes. Dabei gilt für gewöhnlich, dass der Wert, welcher die Größe der Grund-Zweier-Potenz beschränkt auch die Größe der Koeffizienten beschränkt, d.h. mit $(2^N) < b$ gilt auch $a_i < b$ und mit $(2^N) \leq R$ gilt $a_i < R$.

Als erfindungsgemäße portable Datenträger kommen insbesondere Chipkarten, sichere Speicherkarten und dergleichen in Frage.

Die vorliegende Erfindung wird im Folgenden mit Bezug auf die beiliegenden Zeichnungen beispielhaft beschrieben. Darin zeigen:

Figur 1     eine bevorzugte Ausführungsform eines erfindungsgemäßen Datenträgers und

Figur 2     Schritte einer bevorzugten Ausführungsform eines erfindungsgemäßen Verfahrens.

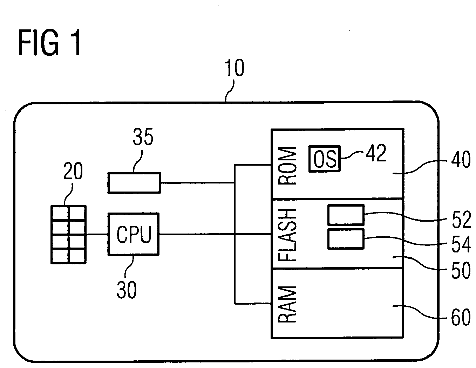

Mit Bezug auf Fig. 1 umfasst ein Datenträger 10, der hier als Chipkarte dargestellt ist, eine Datenkommunikationsschnittstelle 20, einen Prozessor 30, einen Koprozessor 35 sowie verschiedene Speicher 40, 50 und 60. Der Datenträger 10 kann auch in anderer Bauform vorliegen.

Als Datenkommunikationsschnittstelle 20 umfasst der Datenträger 10 ein Kontaktfeld 20 zur kontaktbehafteten Datenkommunikation. Alternativ oder zusätzlich kann eine Antennenspule (nicht gezeigt) zur kontaktlosen Datenkommunikation vorgesehen sein.

Der nicht flüchtige, nicht wiederbeschreibbare ROM-Speicher 40 umfasst ein Betriebssystem (OS) 42 des Datenträgers 10, welches den Datenträger 10 steuert. Zumindest Teile des Betriebssystems 42 können auch in dem nicht flüchtigen, wiederbeschreibbaren Speicher 50 gespeichert sein. Dieser kann beispielsweise als FLASH-Speicher vorliegen.

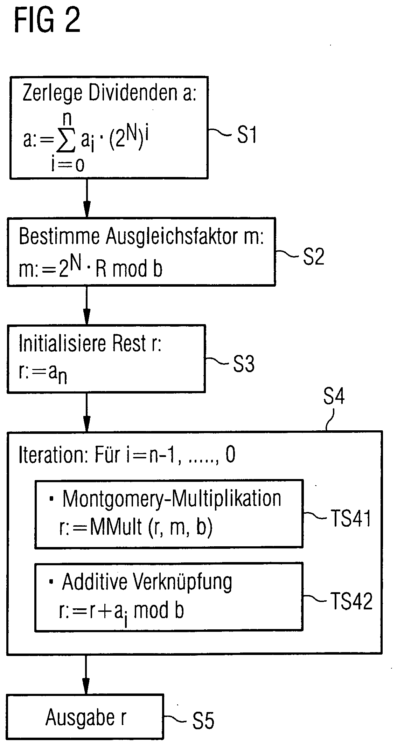

Der Speicher 50 umfasst eine Kryptographieeinrichtung 52, mittels welcher kryptographische Operationen, beispielsweise ein RSA-Verfahren, berechnet werden können. Weiter umfasst der Speicher 50 eine Divisionseinrichtung 54. Diese ist eingerichtet, im Rahmen einer durch die Kryptographieeinrichtung 54 berechneten Operation den Rest eines Dividenden modulo eines Divisors zu bestimmen. Die Divisionseinrichtung 54 kann auch Teil der Kryptographieeinrichtung 52 sein. Die Funktionsweise der Divisionseinrichtung 54 wird mit Bezug auf Fig. 2 genauer beschrieben. Der Speicher 50 kann weitere Applikationen und Daten enthalten, beispielsweise geheime Schlüssel oder Anteile davon.

Der Koprozessor 35 übernimmt die Rolle einer Multiplikationseinrichtung 35. Er ist eingerichtet, eine Montgomery-Multiplikation durchzuführen. Im Wesentlichen wird die Multiplikationseinrichtung 35 von der Kryptographieeinrichtung 52 und der Divisionseinrichtung 54 zum Durchführen der Montgomery-Multiplikation im Rahmen einer Berechnung einer kryptographischen Operation herangezogen werden. Alternativ kann eine entsprechende Multiplikationseinrichtung 35 auch als Softwareeinrichtung in einem der Speicher 40, 50 bereitgestellt werden.

Der flüchtige, wiederbeschreibbare RAM-Speicher 60 dient dem Datenträger 10 als Arbeitsspeicher.

Bevor die Funktionsweise der Divisionseinrichtung 54 genauer beschrieben wird, werden einige den Gesamtzusammenhang beschreibende Tatsachen vorangestellt.

Im Folgenden sei ein Dividend stets mit a bezeichnet, ein ungerader Divisor mit b, der Rest des Dividenden a modulo des Divisors b mit r, d.h. $r = a \bmod b$, und der Quotient von a durch b mit q, d.h. $q = a \operatorname{div} b$. Insgesamt gilt die Gleichung $a = q \cdot b + r$, wobei stets $0 \leq r < b$ erfüllt ist. Es versteht sich, dass alle Werte a, b, r, q sowie alle im Folgenden auftretenden Werte ganze Zahlen sind.

Eine Montgomery-Multiplikation mit Eingabewerten x und y bezüglich einem Modulus M wird mit $MMult(x, y, M)$ bezeichnet und berechnet sich wie folgt: $MMult(x, y, M) := x \cdot y \cdot R^{-1} \bmod M$.

Dabei ist stets M ungerade, kleiner als R und relativ prim zu R, d.h. R und M haben den Wert 1 als größten gemeinsamen Teiler. Der Wert $R^{-1}$ - und der im folgende genannte der Wert M'- definieren sich bei gegebenem M und R wegen der Teilbarkeitsbedingung über die Gleichung R* R$^{-1}$ - M*M' =1.

In der Regel ist vorauszusetzen, dass die Eingabewerte x und y kleiner sind als der Modulus M. Prinzipiell aber kann die Montgomery-Multiplikation auch so modifiziert werden, dass die Eingabewerte größer als der Modulus M, aber immer noch kleiner als der Wert R sind. Dann erhält man als Ausgabe der Montgomery-Multiplikation allerdings lediglich einen Wert C := MMult(x, y, M) < R, für den gilt: C $\equiv$ x*y*R$^{-1}$ mod M.

Die klassische Montgomery-Multiplikation wird, wie in dem oben angegebenen Artikel vom Montgomery beschrieben, wie folgt berechnet: Unter Eingabe der Werte x und y, die beide kleiner als M sind, wird in einem ersten Schritt ein Zwischenwert K vermöge der Vorschrift K := x*y*M' mod R gebildet (M' = -M$^{-1}$ mod R). In der Regel ist R als Zweierpotenz, R = 2$^{\delta}$, gegeben, so dass eine Berechnung modulo R datenträgerintern lediglich einer Shift-Operation entspricht und einfach auszuführen ist. In einem zweiten Schritt wird ein Wert W gebildet, der sich berechnet aus der Vorschrift W := (x*y + K*M)/R. Auch die Division durch R ist einfach durchzuführen, wenn R eine Zweierpotenz ist. Es kann leicht gezeigt werden, dass diese Division stets ohne Rest möglich ist. Wird nun C:= W gesetzt, und falls C $\geq$ M gilt, noch C:= C - M gebildet, so lässt sich zeigen, dass der Wert C dem Ausgabewert der Montgomery-Multiplikation entspricht.

Beim modifizierten Montgomery-Verfahren werden für x und y, die kleiner als R sind, ebenso die Werte K := x*y*M' mod R und W := (x*y + K*M)/R gebildet. Wird nun C:= W gesetzt, und falls C $\geq$ R gilt, noch C:= C - M gebildet, so lässt sich zeigen, dass C kleiner als R und C $\equiv$ x*y*R$^{-1}$ mod M ist. Im Spezialfall y = 1 folgt sogar C $\leq$ M.

Die Tatsache, dass der Modulus stets ungerade sein muss, stellt indes keine wesentliche Einschränkung dar. Sollte der Divisor b als Modulus dienen, so ist zu beachten, dass für b = 2$^t$ * b$_1$, a = 2$^t$ * a$_1$ + a$_0$ mit 0 $\leq$ a < 2$^t$ gilt: a mod b = 2$^t$ * (a$_1$ mod b$_1$) + a$_0$ und a div b = a$_1$ div b$_1$. D.h. es kann der Einfachheit halber stets angenommen werden, dass b ungerade ist.

Konkrete Implementierungen der Montgomery-Multiplikation verwenden zum Teil von oben Angegebenem abweichende Ein- und Ausgabewerte. Beispielsweise können Ein- und Ausgabewerte auch im Bereich -M bis M-1 liegen oder die Ausgabe kann im Bereich 0 bis 2*M-1 liegen. In beiden Fällen kann mit einer bedingten Addition bzw. Subtraktion des Modulus eine Situation herbeigeführt werden, die der vorstehend beschriebenen entspricht.

In der vorliegenden Erfindung wird davon ausgegangen, dass die Multiplikationseinrichtung 35, welche eingerichtet ist, die Montgomery-Multiplikation durchzuführen, bereitsteht, beispielsweise als Software-Modul oder als Koprozessor. Im Fall des Koprozessors besitze dieser eine Koprozessorlänge $\beta$, d.h. er kann Werte der Größe < 2$\beta$ aufnehmen. In vielen Fällen wird für die Montgomery-Multiplikation der R-Wert R = 2$^{\delta}$ mit $\delta$=$\beta$ verwendet. In anderen Fällen gilt $\delta$ > $\beta$.

In den nachstehend beschriebenen Verfahren zur Bestimmung des Restes a mod b wird gelegentlich als ein Eingabewert einer Montgomery-Multiplikation ein geeigneter Ausgleichsfaktor m$_1$ benötigt. Dieser kann beispielsweise die Form m$_1$ = R$^2$ mod b haben. Ein solcher Wert kann auf verschiede, nachfolgend kurz skizzierte Weisen, bestimmt werden.

Falls in dem Datenträger 10 eine schnelle Langzahlmultiplikation bereitsteht, so kann mit Hilfe einer diskreten Newton-Iteration der Wert R$^2$ div b und hieraus m1 berechnet werden. Der Wert R$^2$ div b dient beispielsweise in einem Verfahren gemäß der Barrett-Reduktion, mittels dessen ebenfalls ein modularer Rest berechenbar ist, als Eingabewert.

Alternativ kann zuerst ein Wert 2*R mod b oder 2$^t$ * R mod b berechnet werden (für ein kleines, geeignetes t) und ausgehend hiervon, mittels einiger Montgomery-Multiplikationen und eines Exponentiationsverfahrens, der Wert m$_1$ = 2$^{\delta}$ *R mod b. Zum Berechnen des Wertes 2$^t$ * R mod b kann das folgende Verfahren herangezogen werden: Als Eingabewert dient die Bitlänge L des Divisors b, d.h. es gilt 2$^{L-1}$ < b < 2$^L$ $\leq$ 2$^{\delta}$ = R. Es wird c: = 2$^L$ - b gesetzt und für jedes i=1, ..., t+ $\delta$ -L die Schleife c: =c+c mod b durchgeführt. Dieses Verfahren bietet sich an, wenn der Wert t+ $\delta$ -L klein ist. Falls in dem Datenträger 10 keine modulare Addition zur Verfügung steht, so ist die Operation c: =c+c mod b zu ersetzen durch die Folge von Vorschriften: c: =c+c; falls c $\geq$ b, setze c := c - b.

Falls b eine geheime Zahl ist, beispielsweise ein Anteil der sicherheitsrelevanten Daten, auf denen die kryptographische Operation durchgeführt wird, so muss die Implementierung der Abfrage "c $\geq$ b" gegen Seitenkanalangriffe abgesichert werden. Dies gilt auch für andere durch den Prozessor oder, falls vorhanden, den Koprozessor ausgeführte Operationen auf jeglichen Anteilen der sicherheitsrelevanten Daten oder davon abgeleiteten Werten oder Zwischenergebnissen, ohne dass dies im Folgenden stets erneut angegeben wird.

Mit Bezug auf Fig. 2 werden nachfolgend verschiedene Ausführungsformen eines Verfahrens zum Bestimmen eines Restes r eines Dividenden a modulo einem Divisor b dargestellt. Die Divisionseinrichtung 54 ist dabei jeweils eingerichtet, eines oder mehrere dieser Verfahren auszuführen. Das gleiche gilt für die beschriebenen und noch folgenden Hilfsverfahren, beispielsweise zum effizienten Bestimmen geeigneter Ausgleichsfaktoren m und dergleichen. Vorzugsweise verfügt der Datenträger 10 über eine Einrichtung zum Durchführen einer modularen Addition/Subtraktion.

In den ersten beiden Ausführungsformen wird eine Montgomery-Multiplikation verwendet, deren Ein- und Ausgabewerte durch den Modulus M beschränkt sind. In der dritten Ausführungsform kommt eine Montgomery-Multiplikation zum Einsatz, deren Ein- und Ausgabewerte größer sein können und nur durch den Wert R beschränkt sind.

Das Verfahren gemäß der ersten Ausführungsform erhält als Eingabe einen ungeraden Divisor b. Dieser kann von dem Koprozessor 35 aufgenommen werden, d.h. es gilt b < 2$^{\beta}$ $\leq$ 2$^{\delta}$= R mit 2$^N$ < b. Dabei ist N eine geeignet gewählte ganze Zahl, beispielsweise das größtmöglich Vielfache von 8,16 oder 32, welches $2^N < b$ erfüllt.

Als weitere Eingabe dient der Dividend a. Dieser wird in einem ersten Schritt S1 in der folgenden Form zerlegt: $a = \Sigma_{i=0,...,n}\, a_i{}^*(2^N)^i,\ 0 \leq a_i < 2^N$.

Die Zerlegung des Dividenden a in eine Summe erfolgt vorzugsweise in der Art, dass die Anzahl der Summanden der Summe der Anzahl der zur Bestimmung des Restes benötigten, nachfolgend detailliert beschriebenen Iterationen entspricht. Jeder Summand der Summe ist in der Regel aus einem Produkt zusammengesetzt. Dieses Produkt umfasst den der Iteration zugeordneten Koeffizienten $a_i$ von a sowie eine der Iteration zugeordnete Zweier-Potenz, hier $(2^N)^i$. Diese Zweier-Potenz ergibt sich aus einer iterationsunabhängigen Grund-Zweier-Potenz, hier $2^N$, welche iterationsabhängig nochmals potenziert wird, hier hoch i.

Schließlich erhält das Verfahren noch den Ausgleichsfaktor $m_1 = R^2 \bmod b$ als Eingabewert. Als Ausgabewert gibt das Verfahren den Rest $r = a \bmod b$ aus.

In einem zweiten Schritt S2 wird ein angepasster Ausgleichsfaktor m aus dem Ausgleichsfaktor $m_1$ bestimmt: $m := \mathrm{MMult}(m_1, 2^N, b) = 2^N\,{}^*R \bmod b$. Alternativ kann statt $m_1$ auch direkt m als Eingabewert verwendet worden, so dass dieser Schritt innerhalb des Verfahrens entfällt.

Der Rest r wird nun iterativ bestimmt. In jeder Iteration wird eine Montgomery-Multiplikation mit dem Divisor b als Modulus und eine additive Verknüpfung eines Ausgabewerts der Montgomery-Multiplikation mit einem von dem Dividenden a abgeleiteten, der jeweiligen Iteration zugeordneten Koeffizienten $a_i$ durchgeführt. Die Montgomery-Multiplikation einer nachfolgenden Iteration empfängt dabei ein Ergebnis einer vorhergehenden Iteration als Eingabewert. Jede der Montgomery-Multiplikationen wird mittels der Multiplikationseinrichtung 35, vorzugsweise mittels eines entsprechenden Koprozessors 35, durchgeführt.

Im Einzelnen werden diese Schritte gemäß der ersten Ausführungsform des Verfahrens wie folgt ausgeführt:

Der Rest wird in Schritt S3 initialisiert, gemäß der ersten Ausführungsform vermöge der Vorschrift $r := a_n$.

In Schritt S4 schließlich erfolgt die eigentliche iterative Berechnung von r. Jede Iteration umfasst zwei Teilschritte TS41, TS42: Zum einen in Teilschritt TS41 eine Montgomery-Multiplikation mit dem Divisor b als Modulus, wobei die Montgomery-Multiplikation als Eingabewerte den aktuellen Rest r sowie den Ausgleichsfaktor m empfängt und als Ausgabewert den aktualisierten Rest r ausgibt: $r := \mathrm{MMult}(r, m, b)$. Zum anderen in Teilschritt TS42 eine additive Verknüpfung des Restes r mit dem der Iteration zugeordneten Koeffizienten ai sowie ein modulares Reduzieren des entsprechenden Ergebnisses modulo des Divisors b, um einen aktualisierten Rest zu erhalten: $r := r + a_i \bmod b$.

Am Ende der letzten Iteration wird in Schritt S5 als Ergebnis der Rest $r = a \bmod b$ ausgegeben.

Das Verfahren wird hier noch einmal kurz beschrieben (Algorithmus 3).

Input    ungerader Divisor $b < 2^\beta \leq R$ mit $2^N < b$, Montgomery-Faktor $m1 = R^2 \bmod b$, beliebig großer Dividend a

Output    $r = a \bmod b$

Verfahren

S1    Zerlege $a = \Sigma_{i=0,...,n}\, a_i\, {}^*(2^N)^i$ mit $0 \leq a_i < 2^N$
S2    Berechne $m := \mathrm{MMult}(m1, 2^N, b) = 2^N\,{}^*R \bmod b$
S3    Setze $r := a_n$
S4    Für $i = n-1,...,0$:
TS41    $r := \mathrm{MMult}(r, m, b)$
TS42    $r := r + a_i \bmod b$
S5    Ausgabe von r

Die Korrektheit des Verfahrens ergibt sich unmittelbar. Falls in dem Datenträger 10 keine modulare Addition zur Verfügung steht, muss der Teilschritt TS42 durch die folgenden Schritte ersetzt werden:

$$r := r + a_i,\ \text{falls } (r \geq b),\ r := r - b.$$

Es fällt auf, und dies gilt auch für die nachfolgend beschriebenen weiteren Ausführungsformen, dass lediglich die Größe des Divisors b, nicht aber die Größe des Dividenden a durch Vorgaben der Multiplikationseinrichtung 35 - hier der Koprozessorlänge $\beta$ - beschränkt ist. Der Dividend a kann beliebig groß sein und wird mittels des Verfahrens dadurch bearbeitbar, dass die von dem Dividenden a abgeleiteten Koeffizienten ai so gewählt sind, dass die aus diesen Koeffizienten abgeleiteten Ergebnisse, beispielsweise aus Teilschritt TS42, wiederum von der Multiplikationseinrichtung 35 - in Teilschritt TS41-verarbeitbar sind. Gemäß der gezeigten ersten Ausführungsform sind die Koeffizienten ai zumindest durch die Größe des Modulus b beschränkt.

Falls in einem konkreten Anwendungszusammenhang der durchzuführenden kryptographischen Operation - beispielsweise im Rahmen einer RSA-CTR-Berechnung - nicht der Wert r, sondern der davon abgeleitete Wert c: = a*R mod b benötigt wird, so kann dies leicht dadurch erreicht werden, dass an das vorstehend beschriebene Verfahren gemäß der ersten Ausführungsform ein weiterer Schritt angefügt wird gemäß der Vorschrift: c: = MMult(r, m, b). Der Wert c geht dann - falls a die Basis der RSA-CRT-Berechnung darstellt und b einen der beiden Primfaktoren - als Eingabewert in eine der beiden Teilexponentiationen der RSA-CRT-Berechnung ein, welche ihrerseits auf Montgomery-Multiplikationen aufgebaut sind.

Im Folgenden wird erläutert, wie mit obigem Verfahren eine RSA-CRT-Berechnung beschleunigt werden kann. Beim RSA-CRT werden zwei TeilExponentiationen $x^{dp}$ mod p und $x^{dq}$ mod q durchgeführt, wobei x die Eingangsnachricht, p und q die beiden Primfaktoren des Modulus und dp = d mod p-1 bzw. dq = d mod q-1 vom geheimen Exponenten d abgeleitete Zahlen bezeichnen. Beispielsweise ist die Bitlänge von x gleich 2048 Bits und die von p, q, dp und dq gleich 1024 Bits. Um eine Teil-Exponentiation $x^{dp}$ mod p durchführen zu können, muss aber zuerst x mod p berechnet werden. Dieser Wert geht dann als Startwert in den Exponentiations-Algorithmus ein. Der Exponentiations-Algorithmus selbst besteht aus einer Abfolge von modularen Multiplikationen, die vorzugsweise als Montgomery-Multiplikationen realisiert sind, insbesondere wenn ein Hardware-Beschleuniger die Montgomery-Multiplikation unterstützt. In diesem Fall muss noch der Wert x mod p transformiert werden zu x * R mod p = MMult(x, $R^2$ mod p, p). Um also die Startwerte für eine Teil-Exponentiation bereitzustellen, wird üblicherweise zunächst eine modulare Reduktion x mod p und anschließend noch eine Montgomery-Multiplikation x * R mod p = MMult(x, $R^2$ mod p, p) durchgeführt. Die modulare Reduktion aber ist teuer, z.B. wenn man eine 2048-Bit große Zahl mit der CPU durch eine 1024-Bit große Zahl teilen muss. Beim neuen Verfahren dagegen werden die teure Langzahldivision und die anschließend Montgomery-Multiplikation ersetzt durch einige wenige Montgomery-Multiplikationen.

Das im Folgenden dargestellte Verfahren gemäß einer zweiten Ausführungsform ist gegenüber der ersten Ausführungsform leicht modifiziert. Es gibt nicht den Rest r selbst, sondern den eben angesprochenen Wert c: = a*R mod b aus. Ist lediglich der Wert c zu bestimmen, ist dieses Verfahren der ersten Ausführungsform leicht überlegen, wogegen jene im Allgemeinen bei der Berechnung von r vorzuziehen ist. Aus dem Wert c kann aber wiederum in einem Schritt der Wert r erhalten werden vermöge der Vorschrift r: = MMult(c, 1, b). Es ist zu beachten, dass das folgende Verfahren lediglich dann Vorteile bringt, wenn $\log_2(a)$ - $\log_2(b)$ um einiges größer ist als $\log_2(R)$ - $\log_2(b)$, d.h. wenn a um einiges größer ist als R.

Die Eingaben zum Verfahren gemäß der zweiten Ausführungsform entsprechen im Wesentlichen denen der ersten Ausführungsform: Ein ungerader Divisor b mit b < $2^\beta \leq 2^\delta$= R, und ein Dividend a der Form a = $\Sigma_{i=0,..., n}$ $a_i$*$(R)^i$, 0 $\leq a_i$ < R, sowie ein Ausgleichsfaktor $m_1$ = $R^2$ mod b. Im Gegensatz zur ersten Ausführungsform wird die Grund-Zweier-Potenz nun direkt durch den Wert R vorgegeben, welche auch die Koeffizienten $a_i$ des Dividenden a grö-ßenmäßig beschränkt.

Das Verfahren gibt, wie erwähnt, am Ende nicht r = a mod b sondern c = a*R mod b aus.

Die Initialisierung des Wertes c erfolgt durch den Schritt c:=0.

Bei der iterativen Bestimmung des Wertes c sind im Vergleich zur ersten Ausführungsform die Teilschritte TS41 und TS42 vertauscht. In jeder Iteration wird in einem ersten Teilschritt ein aktualisierter Wert c bestimmt. Dies geschieht mittels der Funktion T(c + $a_i$) = c + $a_i$ mod b. Also auch in diesem Teilschritt wird - analog zum Verfahren der ersten Ausführungsform - ein additives Verknüpfen eines dem Rest entsprechenden Wertes c mit dem der Iteration zugehörigen Koeffizienten ai sowie ein Reduzieren modulo des Divisors b durchgeführt. Es ist zu beachten, dass die Funktion T Werte im Bereich 0 bis R+b-1 als Eingabe aufnimmt und Werte kleiner b ausgibt. Wenn R nicht wesentlich größer als b ist, kann die Berechnung der Funktion T beispielsweise durch wiederholtes Subtrahieren von b erfolgen.

In einem zweiten Teilschritt der Iteration erfolgt dann eine Montgomery-Multiplikation: c := MMult(c, $m_1$, b). Am Ende der letzten Iteration wird der Wert c ausgegeben. Auch die Korrektheit dieses Verfahrens ergibt sich unmittelbar.

Das Verfahren wird hier noch einmal kurz beschrieben (Algorithmus 4).

Input      ungerader Divisor b < $2^\beta \leq$ R, Montgomery-Faktor $m_1$ = $R^2$ mod b, beliebig großer Dividend a
Output     c = a*R mod b

Verfahren

    (1) Zerlege a = $\Sigma_{i=0,..., n}$ $a_i$*$(R)^i$ mit 0 $\leq a_i$ < R
    (2) Setze c := 0
    (3) Für i = n,...,0:

        (3.1) c := T(c + $a_i$) = c + $a_i$ mod b
        (3.2) c := MMult(c, $m_1$, b)

(4) Ausgabe von c

Die im Folgenden beschriebene dritte Ausführungsform eignet sich zur Berechnung des Restes r = a mod b, wenn eine Multiplikationseinrichtung 35 zur Verfügung steht, welche als Ein- und Ausgabewerte solche Werte aufnehmen kann, die lediglich durch den Wert R beschränkt sind.

Auch hier wird als ein Eingabewert ein Ausgleichsfaktor m verwendet, welcher zumindest die folgenden Bedingungen erfüllt: $0 < m_1 < R$ und $m_1 \equiv R^2$ mod b. Dieser Wert kann wie vorstehend beschrieben bestimmt werden. Ein Wert, der zu 2*R mod b kongruent ist, kann besonders effizient wie folgt bestimmt werden:

Die Bitlänge L von b wird vorgegeben, d.h. es gilt $2^{L-1} < b < 2^L \leq R$. Ausgehend hiervon wird ein Wert e := $(2^L-b)*2^{\beta-L+1}$ berechnet. Es kann einfach nachvollzogen werden, dass $e \equiv 2*R$ mod b ist. Für die Berechnung von $m_1$ aus e gelten dann dieselben Überlegungen, wie sie bereits oben gemacht wurden.

Die nun dargestellte dritte Ausführungsform entspricht im Wesentlichen der vorstehend beschriebenen zweiten Ausführungsform:

Als Eingabe empfängt das Verfahren einen ungeraden Divisor b mit b < R, $2^{L-1} < b < 2^L$, einen Dividenden a der Form a = $\Sigma_{i=0,...,n}\, a_i*(R)^i$, $0 \leq a_i < R$, sowie einen Ausgleichsfaktor $m_1 \equiv R^2$ mod b. Ausgegeben wird ein Wert r = a mod b und ein Wert c, wobei $0 \leq c < R$ und $c \equiv a*R$ mod b gilt.

Ein Wert c, entsprechend dem Wert c im zweiten Verfahren, wird initialisiert durch c := 0.

Für alle i=n, ..., 0 wird eine Iteration durchgeführt, welche die beiden beschriebenen Teilschritte umfasst: die additive Verknüpfung mit anschließender modularer Reduktion sowie die Montgomery-Multiplikation. Der erste Teilschritt hat hier die Form:

$$c := c+a_i; \text{ Solange } (c \geq R): c := c - (2^{\beta-L}\,*b).$$

Dieser Teilschritt liefert schließlich einen Wert, der zu $c + a_i$ mod b kongruent und kleiner als R ist. Die Reduktion von c um $(2^{\beta-L}\,*b)$ muss höchstens zweimal ausgeführt werden, da nach Voraussetzung ai < R < 2* $(2^{\beta-L}\,*b)$ gilt.

Der zweite Teilschritt erfolgt analog zur zweiten Ausführungsform gemäß c := MMult(c, m, b).

Soll am Ende r = a mod b statt c = a*R mod b ausgegeben werden, so wird wieder, wie erwähnt, der Schritt r := MMult(c, 1, b) angehängt. Falls sich ergibt, dass r = b ist, wird r:= 0 gesetzt.

Das Verfahren wird hier noch einmal kurz beschrieben (Algorithmus 11).

Input      ungerader Divisor b < R mit $2^{L-1} < b < 2^L$ Montgomery-Faktor $m_1 < R$ mit $m1 \equiv R^2$ mod b beliebig großer Dividend a

Output     r = a mod b und Zahl $0 \leq c < R$ mit $c \equiv a*R$ mod b

Verfahren

(1) Zerlege a = $\Sigma_{i-0,...,n}\, a_i*(R)^i$ mit $0 \leq a_i < R$
(2) Setze c := 0
(3) Für i = n,...,0:

    (3.1) c := c + $a_i$
    (3.2) Solange $(c \geq R)$: c := c - $(2^{\beta-L}\,*b)$
    (3.3) c := MMult(c, $m_1$, b)

(4) Berechne r := MMult(c, 1, b)
(5) Falls (r = b): r := 0
(6) Ausgabe von r und c

Die Korrektheit ist auch hier leicht einzusehen. Insbesondere ergibt sich aus den einleitenden Erörterungen zur Montgomery-Multiplikation, dass nach einer Montgomery-Multiplikation mit 1 der Wert r am Ende kleiner gleich b ist.

**Patentansprüche**

**1.** Verfahren in einem portablen Datenträger (10) zum Ausführen einer kryptographischen Operation auf sicherheitsrelevanten Daten, umfassend einen Schritt des Bestimmens eines Restes (r) eines Dividenden (a) modulo einem Divisor (b), wobei der Rest (r) mittels einer Divisionseinrichtung (54) des Datenträgers (10) iterativ bestimmt wird, indem in jeweils einer Iteration eine Montgomery-Multiplikation (TS41) mit dem Divisor (b) als Modulus und eine additive Verknüpfung (TS41) eines Ausgabewerts der Montgomery-Multiplikation mit einem von dem Dividenden (a) abgeleiteten, der jeweiligen Iteration zugeordneten Koeffizienten ($a_i$) durchgeführt wird, wobei die Montgomery-Multiplikation mittels einer Multiplikationseinrichtung (35) des Datenträgers (10) durchgeführt wird und die Montgomery-Multiplikation einer nachfolgenden Iteration ein Ergebnis einer vorhergehenden Iteration als einen Eingabewert empfängt, wobei der Schritt des Bestimmens eines Restes (r) eines Dividenden (a) modulo einem Divisor (b) die folgenden Schritte umfasst:

- Zerlegen (S1) des Dividenden (a) in Form einer Summe, wobei die Anzahl der Summanden der Summe der Anzahl der zur Bestimmung des Restes (r) benötigten Iterationen entspricht und wobei jeder Summand der Summe aus einem Produkt zusammengesetzt wird, welches den der jeweiligen Iteration zugeordneten Koeffizienten ($a_i$) und eine der Iteration zugeordnete Zweier-Potenz ($2^{N*i}$; $R^i$) umfasst;
- Initialisieren (S3) des Restes (r);
- Durchführen (S4) der folgenden Teilschritte in jeder Iteration, wobei in jedem der Teilschritte der Rest (r) jeweils aktualisiert wird:

- Durchführen einer Montgomery-Multiplikation (TS41) mit dem Divisor (b) als Modulus, wobei die Montgomery-Multiplikation als Eingabewerte den Rest (r) sowie einen Ausgleichsfaktor (m; m1) empfängt und einen aktualisierten Rest (r) ausgibt und wobei der Ausgleichsfaktor (m; m1) für jede Iteration gleich ist;
- Additives Verknüpfen (TS42) des Restes (r) mit dem der Iteration zugeordneten Koeffizienten ($a_i$) und modulares Reduzieren des Ergebnisses modulo dem Divisor (b), um einen aktualisierten Rest (r) zu bestimmen.

2. Verfahren nach Anspruch 1, **dadurch gekennzeichnet, dass** die Multiplikationseinrichtung (35) einen Koprozessor (35) umfasst, welcher die Montgomery-Multiplikation durchführt.

3. Verfahren nach Anspruch 1 oder 2, **dadurch gekennzeichnet, dass** lediglich die Größe des Divisors (b) durch Vorgaben der Multiplikationseinrichtung (35) beschränkt wird und wobei die Größe des Dividenden (a) durch Vorgaben der Multiplikationseinrichtung (35) nicht beschränkt wird.

4. Verfahren nach einem der Ansprüche 1 bis 3, **dadurch gekennzeichnet, dass** die Anzahl der Iterationen zur Bestimmung des Restes (r) durch einen Quotienten beschränkt wird, welcher sich aus dem Logarithmus des Dividenden (a) zu einer gegebenen Basis durch den Logarithmus des Divisors (b) zu dieser Basis ergibt.

5. Verfahren nach Anspruch 1, **dadurch gekennzeichnet, dass**, falls innerhalb der Iteration der Teilschritt (TS42) des additiven Verknüpfens vor dem Teilschritt (TS41) des Durchführens der Montgomery-Multiplikation durchgeführt wird, abschließend eine weitere Montgomery-Multiplikation mit dem Divisor (b) als Modulus durchgeführt wird, welche als Eingabewerte den Rest (r) und den Wert eins empfängt und einen aktualisierten Rest (r) ausgibt.

6. Verfahren nach einem der Ansprüche 1 bis 5, **dadurch gekennzeichnet, dass** die Größe des Ausgabewertes der Montgomery-Multiplikation durch die Größe des Modulus oder durch die Größe des dem Modulus bezüglich der Montgomery-Multiplikation zugeordneten R-Wertes beschränkt wird.

7. Verfahren nach einem der Ansprüche 1, 5 oder 6, **dadurch gekennzeichnet, dass** die einer Iteration jeweils zugeordnete Zweier-Potenz ($2^{N*i}$; $R^i$) aus einer Grund-Zweier-Potenz ($2^N$; R) besteht, welche ihrerseits abhängig von der zugeordneten Iteration nochmals potenziert wird.

8. Verfahren nach Anspruch 7, **dadurch gekennzeichnet, dass** die Größe der Grund-Zweier-Potenz ($2^N$; R) durch die Größe des Divisors (b) oder durch die Größe des dem Modulus bezüglich der Montgomery-Multiplikation zugeordneten R-Wertes beschränkt wird.

9. Verfahren nach einem der Ansprüche 1 bis 8, **dadurch gekennzeichnet, dass** die Größe der Koeffizienten ($a_i$) des Dividenden (a) durch die Größe des Modulus oder durch die Größe des dem Modulus bezüglich der Montgomery-Multiplikation zugeordneten R-Wertes beschränkt wird.

10. Portabler Datenträger (10) zum Ausführen einer kryptographischen Operation auf sicherheitsrelevanten Daten, umfassend einen Prozessor (30), einen Speicher(40; 50; 60), eine Multiplikationseinrichtung (35) zum Durchführen einer Montgomery-Multiplikation sowie eine Divisionseinrichtung (54), welche eingerichtet ist, im Rahmen der kryptographischen Operation einen Rest (r) eines Dividenden (a) modulo einem Divisor (b) zu bestimmen, wobei die Divisionseinrichtung (54) eingerichtet ist, den Rest (r) iterativ zu bestimmen, indem in jeweils einer Iteration eine Montgomery-Multiplikation mit dem Divisor (b) als Modulus mittels der Multiplikationseinrichtung (35) und eine additive Verknüpfung eines Ausgabewerts der Montgomery-Multiplikation mit einem von dem Dividenden (a) abgeleiteten, der jeweiligen Iteration zugeordneten Koeffizienten ($a_i$) mittels der Divisionseinrichtung (54) durchgeführt wird, wobei die Multiplikationseinrichtung (35) eingerichtet ist, zum Durchführen einer Montgomery-Multiplikation einer nachfolgenden Iteration ein Ergebnis einer vorhergehenden Iteration als einen Eingabewert zu empfangen, wobei hierzu die Divisionseinrichtung (54) eingerichtet ist, die folgenden Schritte durchzuführen:

- Zerlegen (S1) des Dividenden (a) in Form einer Summe, wobei die Anzahl der Summanden der Summe der Anzahl der zur Bestimmung des Restes (r) benötigten Iterationen entspricht und wobei jeder Summand der Summe aus einem Produkt zusammengesetzt wird, welches den der jeweiligen Iteration zugeordneten Koeffizienten ($a_i$) und eine der Iteration zugeordnete Zweier-Potenz ($2^{N*i}$; $R^i$) umfasst;
- Initialisieren (S3) des Restes (r);
- Durchführen (S4) der folgenden Teilschritte in jeder Iteration, wobei in jedem der Teilschritte der Rest (r) jeweils aktualisiert wird:

    - Durchführen einer Montgomery-Multiplikation (TS41) mit dem Divisor (b) als Modulus, wobei die Montgomery-Multiplikation als Eingabewerte den Rest (r) sowie einen Ausgleichsfaktor (m; m1) empfängt und einen aktualisierten Rest (r) ausgibt und wobei der Ausgleichsfaktor (m; m1) für jede Iteration gleich ist;
    - Additives Verknüpfen (TS42) des Restes (r) mit dem der Iteration zugeordneten Koeffizienten ($a_i$) und modulares Reduzieren des Ergebnisses modulo dem Divisor (b), um einen aktualisierten Rest (r) zu bestimmen.

**11.** Datenträger (10) nach Anspruch 10, **dadurch gekennzeichnet, dass** die Multiplikationseinrichtung (35) als Koprozessor (35) ausgebildet ist.

**12.** Datenträger (10) nach Anspruch 10 oder 11, **dadurch gekennzeichnet, dass** die Multiplikationseinrichtung (35) eingerichtet ist, eine Montgomery-Multiplikation durchzuführen, deren Ein- und Ausgabewerte im Bereich von -M bis M-1 oder im Bereich von 0 bis 2*M-1 oder im Bereich von 0 bis R-1 liegen, wobei mit M der Modulus bezeichnet ist, bezüglich dessen die Montgomery-Multiplikation durchgeführt wird, und wobei mit R die zum Modulus M teilerfremde Zahl bezeichnet ist, die M bezüglich der Montgomery-Multiplikation zugeordnet ist.

**13.** Datenträger (10) nach einem der Ansprüche 10 bis 12, **dadurch gekennzeichnet, dass** die Divisionseinrichtung (54) eingerichtet ist, ein Verfahren nach einem der Ansprüche 1 bis 9 durchzuführen.

## Claims

**1.** A method in a portable data carrier (10) for executing a cryptographic operation on security-relevant data, comprising a step of determining a remainder (r) of a dividend (a) modulo a divisor (b), wherein the remainder (r) is determined iteratively by means of a division device (54) of the data carrier (10), by carrying out in each iteration a Montgomery multiplication (TS41) with the divisor (b) as the modulus, and an additive linkage (TS41) of an output value of the Montgomery multiplication with a coefficient ($a_i$) derived from the dividend (a) and associated with the respective iteration, the Montgomery multiplication being carried out by means of a multiplication device (35) of the data carrier (10), and the Montgomery multiplication of a subsequent iteration receiving a result of a preceding iteration as an input value, the step of determining a remainder (r) of a dividend (a) modulo a divisor (b) comprising the following steps:

    - decomposing (S1) the dividend (a) in the form of a sum, the number of summands of the sum corresponding to the number of iterations required for determining the remainder (r), and each summand of the sum being composed of a product comprising the coefficient ($a_i$) associated with the respective iteration and a power of two ($2^{N*i}$; $R^i$) associated with the iteration;
    - initializing (S3) the remainder (r);
    - carrying out (S4) the following substeps in each iteration, with the remainder (r) being respectively updated in each of the substeps:

        - carrying out a Montgomery multiplication (TS41) with the divisor (b) as the modulus, the Montgomery multiplication receiving as input values the remainder (r) as well as a compensation factor (m; m1) and outputting an updated remainder (r) and the compensation factor (m; m1) being equal for each iteration;
- additively linking (TS42) the remainder (r) with the coefficient ($a_i$) associated with the iteration and modularly reducing the result modulo the divisor (b) to determine an updated remainder (r).

2. The method according to claim 1, **characterized in that** the multiplication device (35) comprises a coprocessor (35) which carries out the Montgomery multiplication.

3. The method according to claim 1 or 2, **characterized in that** only the size of the divisor (b) is limited by specifications of the multiplication device (35), and the size of the dividend (a) is not limited by specifications of the multiplication device (35).

4. The method according to any of claims 1 to 3, **characterized in that** the number of iterations for determining the remainder (r) is limited by a quotient which results from the logarithm of the dividend (a) for a given base divided by the logarithm of the divisor (b) for said base.

5. The method according to claim 1, **characterized in that**, if the substep (TS42) of additive linking is carried out before the substep (TS41) of carrying out the Montgomery multiplication within the iteration, there is finally carried out a further Montgomery multiplication with the divisor (b) as the modulus, which receives as input values the remainder (r) and the value one and outputs an updated remainder (r).

6. The method according to any of claims 1 to 5, **characterized in that** the size of the output value of the Montgomery multiplication is limited by the size of the modulus or by the size of the R value associated with the modulus with regard to the Montgomery multiplication.

7. The method according to any of claims 1, 5 or 6, **characterized in that** the power of two ($2^{N*i}$; $R^i$) respectively associated with an iteration consists of a basic power of two ($2^N$; R) which is for its part raised to a higher power again in dependence on the associated iteration.

8. The method according to claim 7, **characterized in that** the size of the basic power of two ($2^N$; R) is limited by the size of the divisor (b) or by the size of the R value associated with the modulus with regard to the Montgomery multiplication.

9. The method according to any of claims 1 to 8, **characterized in that** the size of the coefficients ($a_i$) of the dividend (a) is limited by the size of the modulus or by the size of the R value associated with the modulus with regard to the Montgomery multiplication.

10. A portable data carrier (10) for executing a cryptographic operation on security-relevant data, comprising a processor (30), a memory (40; 50; 60), a multiplication device (35) for carrying out a Montgomery multiplication, and a division device (54) which is configured to determine a remainder (r) of a dividend (a) modulo a divisor (b) within the framework of the cryptographic operation, wherein the division device (54) is configured to determine the remainder (r) iteratively by there being carried out in each iteration a Montgomery multiplication with the divisor (b) as the modulus by means of the multiplication device (35) and an additive linkage of an output value of the Montgomery multiplication with a coefficient ($a_i$), derived from the dividend (a) and associated with the respective iteration, by means of the division device (54), the multiplication device (35) being configured to receive a result of a preceding iteration as an input value, for carrying out a Montgomery multiplication of a subsequent iteration, the division device (54) for this purpose being configured to carry out the following steps:

- decomposing (S1) the dividend (a) in the form of a sum, the number of summands of the sum corresponding to the number of iterations required for determining the remainder (r), and each summand of the sum being composed of a product comprising the coefficient ($a_i$) associated with the respective iteration and a power of two ($2^{N*i}$; $R^i$) associated with the iteration;
- initializing (S3) the remainder (r);
- carrying out (S4) the following substeps in each iteration, with the remainder (r) being respectively updated in each of the substeps:

- carrying out a Montgomery multiplication (TS41) with the divisor (b) as the modulus, the Montgomery multiplication receiving as input values the remainder (r) as well as a compensation factor (m; m1) and outputting an updated remainder (r) and the compensation factor (m; m1) being equal for each iteration;

- additively linking (TS42) the remainder (r) with the coefficient ($a_i$) associated with the iteration and modularly reducing the result modulo the divisor (b) to determine an updated remainder (r).

11. The data carrier (10) according to claim 10, **characterized in that** the multiplication device (35) is configured as a coprocessor (35).

12. The data carrier (10) according to claim 10 or 11, **characterized in that** the multiplication device (35) is configured to carry out a Montgomery multiplication whose input and output values lie in the range of -M to M-1 or in the range of 0 to 2*M-1 or in the range of 0 to R-1, where M designates the modulus with regard to which the Montgomery multiplication is carried out, and where R designates the number coprime to the modulus M and associated with M with regard to the Montgomery multiplication.

13. The data carrier (10) according to any of claims 10 to 12, **characterized in that** the division device (54) is configured to carry out a method according to any of claims 1 to 9.

**Revendications**

1. Procédé dans un support de données (10) portable, destiné à l'exécution d'une opération cryptographique sur des données touchant à la sécurité, comprenant une étape de la détermination d'un reste (r) d'un dividende (a) modulo un diviseur (b), cependant que le reste (r) est déterminé itérativement au moyen d'un dispositif de division (54) du support de données (10), ce qui a lieu en ce que, dans respectivement une itération, une multiplication de Montgomery (TS41) avec le diviseur (b) comme module et une liaison additive (TS41) d'une valeur de sortie de la multiplication de Montgomery avec un coefficient ($a_i$) dérivé du dividende (a) et associé à l'itération respective est exécutée, cependant que la multiplication de Montgomery est exécutée au moyen d'un dispositif de multiplication (35) du support de données (10) et que la multiplication de Montgomery d'une itération subséquente reçoit un résultat d'une itération précédente en tant qu'une valeur d'entrée, cependant que l'étape de la détermination d'un reste (r) d'un dividende (a) modulo un diviseur (b) comprend les étapes suivantes :

- décomposition (S1) du dividende (a) sous forme d'une somme, cependant que le nombre des termes de la somme correspond au nombre de l'itération nécessaire à la détermination du reste (r), et cependant que chaque terme de la somme est composé d'un produit qui comprend le coefficient ($a_i$) associé à l'itération respective et une puissance de deux ($2^{N*i}$; $R^i$) associée à l'itération ;
- initialisation (S3) du reste (r);
- exécution (S4) des étapes partielles suivantes dans chaque itération, cependant que, dans chacune des étapes partielles, le reste (r) est respectivement actualisé ;

  - exécution d'une multiplication de Montgomery (TS41) avec le diviseur (b) comme module, cependant que la multiplication de Montgomery reçoit comme valeur d'entrée le reste (r) ainsi qu'un facteur de compensation (m; m1) et délivre en sortie un reste (r) actualisé, et cependant que le facteur de compensation (m; m1) est identique pour chaque itération ;
  - liaison additive (TS42) du reste (r) avec le coefficient ($a_i$) associé à l'itération, et réduction modulaire du résultat modulo le diviseur (b), afin de déterminer un reste (r) actualisé.

2. Procédé selon la revendication 1, **caractérisé en ce que** le dispositif de multiplication (35) comprend un coprocesseur (35) qui exécute la multiplication de Montgomery.

3. Procédé selon la revendication 1 ou 2, **caractérisé en ce que** seulement la grandeur du diviseur (b) est limitée par des spécifications du dispositif de multiplication (35), et cependant que la grandeur du dividende (a) n'est pas limitée par des spécifications du dispositif de multiplication (35).

4. Procédé selon une des revendications de 1 à 3, **caractérisé en ce que** le nombre des itérations destinées à la détermination du reste (r) est limité par un quotient qui découle du logarithme du dividende (a) à une base donnée par le logarithme du diviseur (b) à cette base.

5. Procédé selon la revendication 1, **caractérisé en ce que**, dans le cas où, à l'intérieur de l'itération, l'étape partielle (TS42) de la liaison additive est exécutée avant l'étape partielle (TS41) de l'exécution de la multiplication de Montgomery, en dernier lieu une autre multiplication de Montgomery avec le diviseur (b) comme module est exécutée, laquelle reçoit comme valeurs d'entrée le reste (r) et la valeur un et délivre en sortie un reste (r) actualisé.

6. Procédé selon une des revendications de 1 à 5, **caractérisé en ce que** la grandeur de la valeur de sortie de la multiplication de Montgomery est limitée par la grandeur du module ou par la grandeur de la valeur R associée au module relativement à la multiplication de Montgomery.

7. Procédé selon une des revendications 1, 5 ou 6, **caractérisé en ce que** la puissance de deux $(2^{N*i}; R^i)$ respectivement associée à une itération consiste en une puissance de deux fondamentale $(2^N; R)$ qui, quant à elle, est encore une fois élevée à une puissance en fonction de l'itération associée.

8. Procédé selon la revendication 7, **caractérisé en ce que** la grandeur de la puissance de deux fondamentale $(2^N; R)$ est limitée par la grandeur du diviseur (b) ou par la grandeur de la valeur R associée au module relativement à la multiplication de Montgomery.

9. Procédé selon une des revendications de 1 à 8, **caractérisé en ce que** la grandeur du coefficient $(a_i)$ du dividende (a) est limitée par la grandeur du module ou par la grandeur de la valeur R associée au module relativement à la multiplication de Montgomery.

10. Support de données (10) portable destiné à l'exécution d'une opération cryptographique sur des données touchant à la sécurité, comprenant un processeur (30), une mémoire (40; 50; 60), un dispositif de multiplication (35) destiné à l'exécution d'une multiplication de Montgomery, ainsi qu'un dispositif de division (54) conçu pour, dans le cadre de l'opération cryptographique, déterminer un reste (r) d'un dividende (a) modulo un diviseur (b), cependant que le dispositif de division (54) est conçu pour déterminer le reste (r) itérativement, ce qui a lieu en ce que, dans respectivement une itération, une multiplication de Montgomery avec le diviseur (b) comme module est exécutée au moyen du dispositif de multiplication (35), et une liaison additive d'une valeur de sortie de la multiplication de Montgomery avec un coefficient $(a_i)$ dérivé du dividende (a) et associé à l'itération respective est exécutée au moyen d'un dispositif de division (54), cependant que le dispositif de multiplication (35) est conçu pour, aux fins de l'exécution d'une multiplication de Montgomery d'une itération subséquente, recevoir un résultat d'une itération précédente en tant qu'une valeur d'entrée, cependant que, pour cela, le dispositif de division (54) est conçu pour exécuter les étapes suivantes :

    - décomposition (S1) du dividende (a) sous forme d'une somme, cependant que le nombre des termes de la somme correspond au nombre de l'itération nécessaire à la détermination du reste (r), et cependant que chaque terme de la somme est composé d'un produit qui comprend le coefficient $(a_i)$ associé à l'itération respective et une puissance de deux $(2^{N*i}; R^i)$ associée à l'itération ;
    - initialisation (S3) du reste (r);
    - exécution (S4) des étapes partielles suivantes dans chaque itération, cependant que, dans chacune des étapes partielles, le reste (r) est respectivement actualisé ;

        - exécution d'une multiplication de Montgomery (TS41) avec le diviseur (b) comme module, cependant que la multiplication de Montgomery reçoit comme valeur d'entrée le reste (r) ainsi qu'un facteur de compensation (m; m1) et délivre en sortie un reste (r) actualisé, et cependant que le facteur de compensation (m; m1) est identique pour chaque itération ;
        - liaison additive (TS42) du reste (r) avec le coefficient $(a_i)$ associé à l'itération, et réduction modulaire du résultat modulo le diviseur (b), afin de déterminer un reste (r) actualisé.

11. Support de données (10) selon la revendication 10, **caractérisé en ce que** le dispositif de multiplication (35) est réalisé sous forme de coprocesseur (35).

12. Support de données (10) selon la revendication 10 ou 11, **caractérisé en ce que** le dispositif de multiplication (35) est conçu pour exécuter une multiplication de Montgomery dont les valeurs d'entrée et de sortie sont comprises entre -M et M-1 ou entre 0 et 2*M-1 ou entre 0 et R-1, cependant que M désigne le module relativement auquel la multiplication de Montgomery est exécutée, et cependant que R désigne le chiffre étranger au diviseur du module M et associé à M relativement à la multiplication de Montgomery.

13. Support de données (10) une des revendications de 10 à 12, **caractérisé en ce que** le dispositif de division (54) est conçu pour exécuter un procédé selon une des revendications de 1 à 9.

## FIG 1

# FIG 2

Zerlege Dividenden a:

$$a := \sum_{i=0}^{n} a_i \cdot (2^N)^i$$

— S1

Bestimme Ausgleichsfaktor m:

$m := 2^N \cdot R \bmod b$

— S2

Initialisiere Rest r:

$r := a_n$

— S3

— S4

Iteration: Für i=n-1, ....., 0

- Montgomery-Multiplikation

  $r := \mathrm{MMult}\,(r, m, b)$

— TS41

- Additive Verknüpfung

  $r := r + a_i \bmod b$

— TS42

Ausgabe r — S5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **PETER L. MONTGOMERY.** Modular Multiplication Without Trial Division. *Mathematics of Computation,* April 1985, vol. 44 (170), 519-521